# EUROPÄISCHE PATENTSCHRIFT

(11) **EP 3 620 712 B1**
(45) Veröffentlichungstag und Bekanntmachung des Hinweises auf die Patenterteilung: **14.04.2021**
(21) Anmeldenummer: 19196165.5
(22) Anmeldetag: 09.09.2019
(51) Int. Cl.: F21S 10/02, F21W 131/105, F21Y 113/13, F21Y 115/10, F21Y 105/10

(54) **SPORTSTÄTTENBELEUCHTUNG ZUR FÖRDERUNG DES RASENWACHSTUMS**
SPORT SITE ILLUMINATION FOR PROMOTING LAWN GROWTH
ÉCLAIRAGE D'INSTALLATION SPORTIVE PERMETTANT DE FAVORISER LA CROISSANCE DU GAZON

(30) Priorität: 07.09.2018 DE 102018121898
(43) Veröffentlichungstag der Anmeldung: 11.03.2020
(73) Patentinhaber: SITECO GmbH, 83301 Traunreut (DE)
(72) Erfinder: Eichele, Timo, 83362 Surberg (DE); Wuppinger, Bernhard, 83362 Surberg (DE)
(74) Vertreter: Schmidt, Steffen

(56) Entgegenhaltungen:
- DE-T5-112013 005 481
- US-A1- 2010 315 012
- US-A1- 2011 285 295
- US-A1- 2013 076 262
- US-A1- 2014 028 197
- US-A1- 2016 169 459
- US-A1- 2016 372 646
- US-A1- 2017 150 571

## Beschreibung

Die vorliegende Erfindung betrifft einen Scheinwerfer für die Beleuchtung von Sportstätten mit Rasenflächen, insbesondere einen Stadionscheinwerfer, sowie die Verwendung des Scheinwerfers und eine Sportstätte mit entsprechenden Scheinwerfern.

Die Rasenflächen der Sportstätte sind sehr stark beansprucht. Um die Rasenfläche regenerieren zu können, wurde im Stand der Technik vorgesehen, die Rasenfläche mit einer Vielzahl von Metalldampflampen, insbesondere Natriumdampflampen, zu beleuchten, um das Wachstum des Rasens zu fördern. Die Metalldampflampen werden auf rollenden Gerüsten hängend über der Rasenfläche platziert, wobei die Lampen in wenigen Metern über der Rasenfläche angeordnet sind. Diese Beleuchtung für die Förderung des Rasenwachstums ist daher sehr aufwendig und unabhängig von der sonstigen Beleuchtung der Sportstätte vorgesehen. Die zusätzlichen Energiekosten für eine Rasenfläche können sich leicht auf mehrere hundert tausend Euro pro Jahr belaufen, von den Anschaffungskosten eines solchen System ganz abgesehen.

Ein weiterer Nachteil eines solchen Systems ist, dass die Rollwägen, an denen die Metalldampflampen aufgehängt sind, mechanisch bewegt werden müssen. Durch das Verschieben des Beleuchtungssystems wird die Rasenfläche zusätzlich belastet. Es kann nicht gleichzeitig die gesamte Rasenfläche beleuchtet werden. Außerdem kann im Sommer oder in südlichen Ländern das weitere Problem hinzutreten, dass sich die von den Metalldampfleuchten erzeugte Wärme über dem Rasen staut. Dieser Hitzestau kann die Rasenfläche schädigen. Im ungünstigsten Fall muss zum Abbau des Hitzestaus ein separates Gebläse installiert werden. Ein weiterer Nachteil des Systems ist, dass während der Beleuchtung der Rasenfläche kein Training oder keine weiter Pflege des Rasens z.B. durch Sprinkleranlagen mehr möglich ist.

Die US 2013/076262 A1 und die DE 11 2013 005 481 T5 offenbaren Leuchten gemäß dem Oberbegriff des Anspruchs 1. Die US 2010/315012 A1 offenbart eine weitere Leuchte mit LEDs, die unterschiedliche Farbwidergabeindizes aufweisen.

Aufgabe der vorliegenden Erfindung ist es, eine Sportstättenbeleuchtung zur Förderung des Rasenwachstums bereitzustellen, welche die im Stand der Technik bekannten Nachteile, insbesondere die hohen Energiekosten, den Hitzestau und das aufwendige Verschieben von Rollsystemen, überwindet.

Gelöst wird die Aufgabe durch einen Scheinwerfer zur Beleuchtung von Sportstätten nach Anspruch 1, durch eine Verwendung des Scheinwerfers nach Anspruch 10 sowie durch eine Sportstätte mit einer Vielzahl derartiger Scheinwerfer nach Anspruch 12.

Eine Besonderheit der vorliegenden Erfindung besteht darin, dass ein Scheinwerfer, der für die Beleuchtung der Sportstätte vorgesehen ist, gleichzeitig zur Ausleuchtung der Sportstätte im Spielbetrieb und auch Förderung des Rasenwachstums eingesetzt werden kann. D.h., es sind keine separaten Scheinwerfer für die Flutlichtanlage z.B. in einem Stadion und für die Scheinwerfer zur Förderung des Rasenwachstums erforderlich. In dem gleichen Scheinwerfer sind dazu zwei verschiedene Typen von LEDs (lichtemittierenden Dioden, worunter jede Art von Halbleiterlichtquelle einschließlich organischer LED verstanden wird) vorgesehen. Ein erster LED-Typ in dem Scheinwerfer weist LEDs mit einem Farbwidergabeindex von unter 80, vorzugsweise etwa 70 mit beispielsweise 4000K, auf. Der zweite LED-Typ weist ein Full-Spektrum auf, das nahe dem des natürlichen Sonnenlicht ist, mit einem Farbwidergabeindex von über 90, insbesondere wenigstens 95 mit beispielsweise 5700K auf. Dieser LED-Typ ist aufgrund der spektralen Eigenschaften nahe dem natürlichen Sonnenlicht für die Förderung des Rasenwachstums geeignet. Eine Beleuchtung nur mit Full-Spektrum-LEDs hätte im Vergleich zu einer normgerechten Stadionbeleuchtung mit einem Farbwidergabeindex von mindestens 80 den Nachteil einer geringeren Effizienz bei höheren Kosten. Außerdem reicht bei der Stadionbeleuchtung in den meisten Fällen für eine normgerechte Beleuchtung 5000K, das durch das Mischen der LEDS vom ersten und zweiten Typ erzielt wird. Die Mischung der beiden LED-Typen bietet den Vorteil einer höheren Effizienz und gleichzeitig die Möglichkeit, die zusätzlichen Kosten für die separate Rasenbeleuchtung einzusparen. Je nach Mischungsverhältnis der beiden LED-Typen kann auch die Lichtfarbe und nicht nur der Farbwidergabeindex eingestellt werden.

Erfindungsgemäß sind die LEDs des Scheinwerfers zu 20% bis 40% vom ersten LED-Typ und zu 60% bis 80% vom zweiten LED-Typ. Vorzugsweise sind etwa 30% von dem ersten LED-Typ und etwa 70% vom zweiten LED-Typ gebildet, wobei einer Toleranz von ± 5% vorgesehen ist.

Gemäß einer bevorzugten Ausführungsform sind die zwei LED-Typen in dem Scheinwerfer separat ansteuerbar, insbesondere separat dimmbar. Dadurch kann beispielsweise während des Gebrauchs der Sportstätte der Anteil des Lichts von dem ersten LED-Typ erhöht werden, um die notwendige Beleuchtungsaufgabe zu erfüllen. Nach dem Spielbetrieb kann der Anteil des Lichts vom zweiten LED-Typ zur Förderung des Rasenwachstums erhöht werden. Dabei kann während dem Trainingsbetrieb oder bei Wartungsarbeiten in der Anlage auch die Beleuchtung zur Förderung des Rasenwachstums eingesetzt werden, was bei einem herkömmlichen System von Metalldampflampen auf Rollwagen nicht möglich ist.

Insbesondere ist vorgesehen, dass die LEDs vom zweiten Typ höher bestrombar sind als die LEDs vom ersten Typ. Dadurch kann der Anteil des zum Rasenwachstum förderlichen Spektralbereichs in dem Zeiten außerhalb der Zeit der Bespielung der Sportstätte erhöht werden.

Während der Bespielung der Sportstätte kann der Anteil des ersten LED-Typs hinzugeschaltet werden, um die notwendige Beleuchtungsaufgabe, welche z.B. für Fernsehübertragungen notwendig ist, zu realisieren.

In unterschiedlichen Ausführungsformen können die LEDs des ersten und des zweiten Typs innerhalb des Scheinwerfers unterschiedlich angeordnet sein. Beispielsweise ist es möglich, die LEDs einzeln im Scheinwerfer anzuordnen, wobei sich die unterschiedlichen LED-Typen abwechseln. Da mehr LEDs vom zweiten Typ gegenüber dem ersten Typ bevorzugt sind, weist vorzugsweise jede LED des ersten Typs nächste Nachbarn auf, die durch LEDs vom zweiten Typ gebildet sind.

Alternativ können die LEDs auch in Clustern angeordnet sein. Beispielsweise kann ein Cluster jeweils nur LEDs von einem der beiden Typen aufweisen. Dann sind vorzugsweise mehr Cluster vorgesehen, welche den zweiten LED-Typ aufweisen. Alternativ kann auch vorgesehen sein, dass einige der Cluster gemischte LEDs von beiden Typen aufweisen.

Gemäß einer bevorzugten Ausführungsform sind die Cluster jeweils auf einem eigenen Printed Circuit Board (PCB) angeordnet. Dadurch lassen sich die Cluster separat elektrisch anschließen, um beispielsweise die Cluster und/oder die LED-Typen unterschiedlich ansteuern zu können.

Bei der Verwendung der Scheinwerfer zur Beleuchtung einer Rasenfläche kann vorgesehen sein, die beiden LED-Typen zeitabhängig voneinander unterschiedlich zu bestromen. Insbesondere kann nach einem vorgegebenen Zeitprogramm die Sportstättenbeleuchtung einen höheren Teil des ersten LED-Typs während der Bespielung der Sportstätte und einen geringeren Anteil des Lichts des ersten LED-Typs während der Trainingsphase oder während sonstiger Wartungs- und Reparaturarbeiten an der Sportstätte aufweist. Ferner können die beiden LED-Typen der Scheinwerfer auch abhängig von einem Messergebnis wenigstens eines Umweltsensors (z.B. Lichtsensor, Regensensor, Temperatursensor etc.) gesteuert werden.

Eine Sportstätte ist erfindungsgemäß mit einer Vielzahl derartiger Scheinwerfer ausgestattet, wobei die Scheinwerfer zum Teil die Rasenfläche ausleuchten. Weiteres Licht der Scheinwerfer kann auch auf die Zuschauertribünen oder auf sonstige Einrichtungen der Sportstätte gerichtet sein. Dabei ist von Vorteil, dass die gleichen Scheinwerfer für die Beleuchtung der Rasenfläche zur Förderung des Rasenwachstums und zur Beleuchtung der Sportstätte bei der Bespielung der Sportstätte genutzt werden können. Ferner ergibt sich der Vorteil, dass dadurch die Scheinwerfer verhältnismäßig weit von der Rasenfläche entfernt sind. Ein Hitzestau unmittelbar über der Rasenfläche, wie bei Metalldampflampen auf einem Gerüst unmittelbar an der Rasenfläche entsteht, kann dadurch vermieden werden, ohne dass separate Gebläse oder ähnliches vorgesehen werden müssen. Vorzugsweise sind die Stadionscheinwerfer in der Sportstätte wenigstens 20 m von der Rasenfläche entfernt.

Weitere Merkmale und Vorteile der vorliegenden Erfindung werden aus der nachfolgenden Beschreibung bevorzugter Ausführungsformen deutlich, die in Verbindung mit den beigefügten Figuren gegeben wird. In den Figuren ist Folgendes dargestellt:
Figur 1 zeigt die schematische Anordnung von zwei LED-Typen in einem Scheinwerfer gemäß einer ersten Ausführungsform.
Figur 2 zeigt eine schematische Anordnung von zwei LED-Typen in einem Scheinwerfer gemäß einer zweiten Ausführungsform.
Figur 3 zeigt eine schematische Anordnung von zwei LED-Typen in einem Scheinwerfer gemäß einer dritten Ausführungsform.
Figur 4 zeigt eine schematische Anordnung von zwei LED-Typen auf Printed Circuit Boards in einem Scheinwerfer gemäß einer vierten Ausführungsform.

Die Erfindung bezieht sich auf Anwendungen in der Außenbeleuchtung insbesondere einen Stadionscheinwerfer. Dabei kommt eine LED-Kombination zum Einsatz die ideal für das Rasenwachstum als auch für den Sportbetrieb im Stadion geeignet ist. Durch definierte Mischung von bsp. 70% Full-Spektrum LEDs mit einem Farbwidergabeindex von 95 mit 30% LEDs mit einem Farbwidergabeindex von 70 erhält man als resultierende Lichtfarbe beispielsweise 5000K mit einem Farbwidergabeindex von mindestens 80, was einer idealen normgerechten Sportstättenbeleuchtung entspricht. Eine durchschnittliche Sportstättenbeleuchtung umfasst ca. 400 Leuchten, die die Rasenflache gleichmäßig verteilt beleuchten. Je nach Wettbewerbs-Anforderungen sind Beleuchtungsstärken von über 2000 lx gefordert und realisierbar. Um auch für Publikum und Kameras ideale Beleuchtungsverhältnisse zu schaffen, muss das Spielfeld von allen Seiten gleichmäßig beleuchtet werden. Diese Beleuchtung von allen Seiten ist auch für das Wachstum des Rasens eine ideale Beleuchtung.

Daher sieht eine Ausführungsform der vorliegenden Erfindung einen Stadionscheinwerfer vor, welcher LEDs aufweist, die zu 30% von einem ersten LED-Typ 1 gebildet sind mit einem Farbwidergabewert von etwa 70, und einem zweiten LED-Typ 2 zu 70% in Form von Full-Spektrum-LEDs, d.h. mit einem Farbwidergabeindex von etwa 95 und einem Spektrum nahe dem natürlichen Sonnenlicht.

Durch den 70% Anteil des zweiten LED-Typs in den Scheinwerfern tragen diese auch während des Spielbetriebs zu der Rasenbeleuchtung/-wachstum bei. Eine Beleuchtung nur mit Full-Spektrum LEDs hat im Vergleich zur normgerechten Stadionbeleuchtung mit einem Farbwidergabeindex von mindestens 80 durch den hohen Farbwidergabeindex eine geringere Effizienz bei höheren Kosten. Dadurch ist die Verwendung dieser LEDs zur Erfüllung der notwendigen Beleuchtungsaufgabe nicht zielführend und eine Mischung der LEDs ideal.

Wird die Beleuchtung nicht mehr für die normgerechte Beleuchtung beim Spielbetrieb benötigt, können die LEDs des ersten Typs 1 ausgeschaltet und gegebenenfalls die LEDs des zweiten Typs 2 höher bestromt werden. Somit kann die Stadionbeleuchtung ausschlich für das Rasenwachstum, Pflege der Rasenflächen verwendet werden, ohne dass eine extra kostenintensive Sonderlösung benötigt wird. Bei dem daraus entstandenen reduzierten Lichtniveau ist sogar auch ein Trainingsbetrieb machbar.

Durch eine individuelle Ansteuerung der Scheinwerfer kann der Rasen komplett oder auch nur partiell beleuchtet werden. So kann für Rasenflächen die durch das Stadion selbst (z.B. Stadiondach) abgeschaltet werden, die fehlende Sonne bedarfsgerecht kompensiert werden. Eine Software in optionaler Kombination mit entsprechenden Umweltsensoren (z.B. Lichtsensor, Temperatursensor und/oder Regensensor) kann dann gezielt und automatisiert ein für jedes Stadion angepasstes Programm abfahren und so eine bestmögliche Pflege bei minimierten Energiekosten ermöglichen. Tage, an denen keine Sonne scheint, könnten so auch für den Rasen automatisiert über die Leuchten kompensiert werden.

Durch die Verwendung der Sportstättenbeleuchtung, die z.B. wenigstens 20m über der Rasenfläche angeordnet ist, ist ein Hitzestau ausgeschlossen. Gebläseeinrichtungen sind nicht mehr notwendig. Dies ist ein erheblicher Vorteil für Sportstätteneinrichtungen in südlichen Ländern.

Da die Stadionbeleuchtung in der Regel nach Spielende noch für mehrere Stunden zur Reinigung des Stadion im Betrieb gelassen wird, mit Änderung des Spektrums kann diese Zeit gleichzeitig auch zur Pflege der Rasenflächen genutzt werden.

Die LED-Kombination der zwei LED-Typen 1, 2 kann auf verschiedene Weise geschehen, und wird in den folgenden Figuren ausführlicher beschrieben.

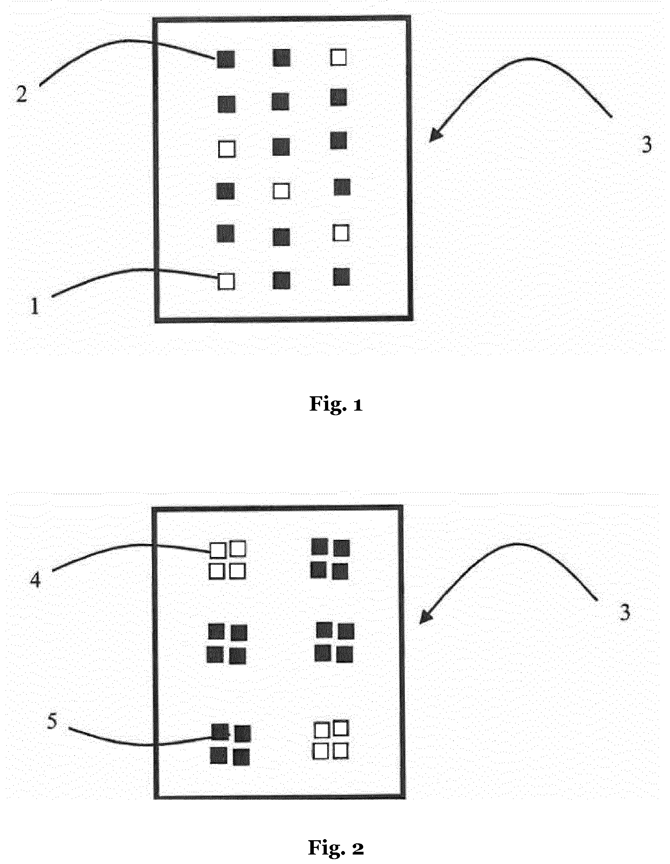

Figur 1 zeigt einen Scheinwerfer 3, in welchem LEDs des ersten Typs 1 und LEDs des zweiten Typs 2 jeweils einzeln auf einer Trägerfläche angeordnet sind. Es sind mehr LEDs des zweiten Typs 2 als des ersten Typs 1 vorhanden. Ferner ist jede LED des ersten Typs 1 von nächsten Nachbarn umgeben, die vom zweiten Typ 2 gebildet sind.

Figur 2 zeigt eine Ausführungsform, in welcher die LEDs in Clustern 4 und 5 angeordnet sind. Die Cluster 4 umfassen nur LEDs des ersten Typs 1 und die Cluster 5 umfassen nur LEDs des zweiten Typs 2. Auch in dieser Ausführungsform ist das Verhältnis von etwa 70% des zweiten Typs und 30% des ersten Typs realisiert.

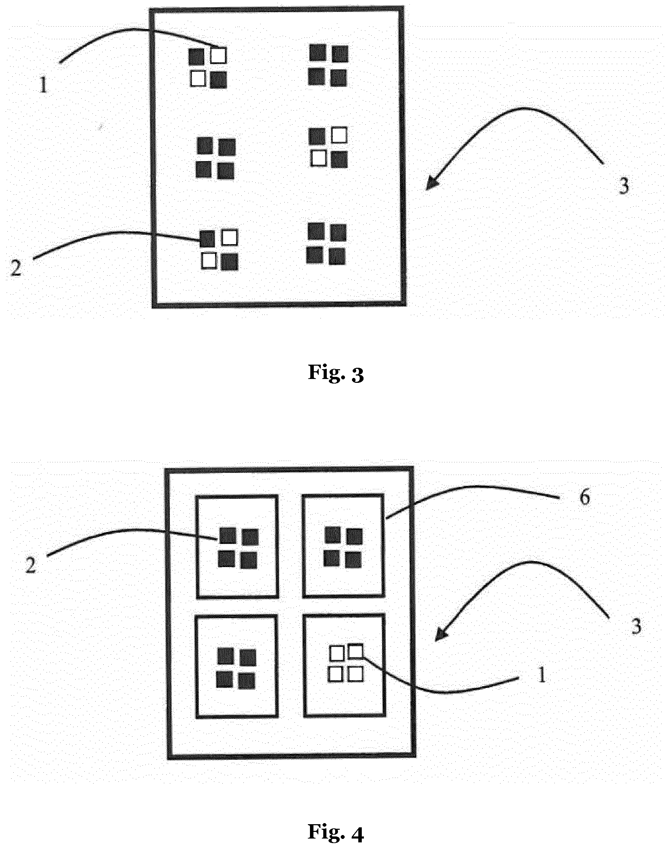

In der Ausführungsform nach Figur 3 sind LED-Cluster gebildet, die gemischt aus LEDs vom ersten und zweiten Typ bestehen. Ferner sind noch Cluster vorgesehen, die nur aus LEDs des zweiten Typs bestehen. Auch dadurch kann ein Verhältnis von etwa 70% zu 30% zwischen dem ersten und zweiten LED-Typ realisiert werden.

Figur 4 zeigt eine Ausführungsform mit LED-Clustern, wobei jedes Cluster auf einem einzelnen PCB 6 angeordnet ist. Die PCBs 6 sind separat elektronisch angesteuert (in der Figur nicht dargestellt), um die LED-Cluster separat schalten zu können.

### BEZUGSZEICHENLISTE

- 1: erster LED-Typ
- 2: zweiter LED-Typ
- 3: Scheinwerfer
- 4: LED-Cluster des ersten LED-Typs
- 5: LED-Cluster des zweiten LED-Typs
- 6: PCB

## Patentansprüche

1. Scheinwerfer (3) für eine Beleuchtung von Sportstätten mit Rasenflächen, insbesondere Stadionscheinwerfer, mit Lichtquellen in Form von LEDs, wobei der Scheinwerfer (3) wenigstens einen ersten LED-Typ (1) und einen zweiten LED-Typ (2) aufweist, wobei der zweite LED-Typ (2) Full-Spektrum-LEDs mit einem Farbwidergabeindex von über 90, insbesondere wenigstens 95, und der erste LED-Typ (1) LEDs mit einem Farbwidergabeindex von unter 80, vorzugsweise 70 oder weniger, aufweist, **dadurch gekennzeichnet, dass** die LEDs des Scheinwerfers zu 20% bis 40% von dem ersten LED-Typ (1) und zu 60% bis 80% von dem zweiten LED-Typ (2) gebildet sind.

2. Scheinwerfer (3) nach Anspruch 1, wobei die LEDs des Scheinwerfers zu 30% ± 5% von dem ersten LED-Typ (1) und zu 70% ± 5% von dem zweiten LED-Typ (2) gebildet sind.

3. Scheinwerfer (3) nach einem der vorhergehenden Ansprüche, wobei die zwei LED-Typen (1, 2) in dem Scheinwerfer separat ansteuerbar, insbesondere separat dimmbar, sind.

4. Scheinwerfer (3) nach Anspruch 3, wobei die LEDs vom zweiten Typ (2) höher bestrombar sind als die LEDs vom ersten Typ (1).

5. Scheinwerfer (3) nach einem der vorhergehenden Ansprüche, wobei die LEDs in der Leuchte einzeln angeordnet sind und die nächsten Nachbarn einer LED des ersten Typs (1) wenigstens zum Teil durch LEDs des zweiten LED-Typs (2) gebildet sind.

6. Scheinwerfer (3) nach einem der Ansprüche 1 bis 4, wobei die LEDs in Clustern (4, 5) von jeweils einem der beiden LED-Typen (1, 2) angeordnet sind.

7. Scheinwerfer (3) nach einem der Ansprüche 1 bis 4, wobei die LEDs in Clustern angeordnet sind und wenigstens einige der Cluster LEDs von beiden LED-Typen (1, 2) umfassen.

8. Scheinwerfer (3) nach Anspruch 6 oder 7, wobei jedes der Cluster auf jeweils einer eigenen Printed Circuit Board, PCB, (6) angeordnet ist.

9. Verwendung eines oder mehrerer der Scheinwerfer (3) nach einem der vorhergehenden Ansprüche zur Beleuchtung einer Rasenfläche.

10. Verwendung nach Anspruch 9, wobei eine Steuersoftware die LEDs der beiden Typen (1, 2) zeitabhängig und/oder in Abhängigkeit von Messwerten wenigstens eines Umweltsensors unterschiedlich bestromt.

11. Sportstätte mit einer Vielzahl von Scheinwerfern (3) nach einem der Ansprüche 1 bis 8, wobei die Scheinwerfer (3) wenigstens zum Teil auf einer Rasenfläche der Sportstätte ausgerichtet sind.

## Claims

1. A floodlight (3) for lighting sports facilities with grass surfaces, in particular stadium floodlights, with light sources in the form of LEDs, the floodlight (3) having at least a first LED type (1) and a second LED type (2), the second LED type (2) having full-spectrum LEDs with a color rendering index of more than 90, in particular at least 95, and the first LED type (1) having LEDs with a color rendering index of below 80, preferably 70 or less, **characterized in that** 20% to 40% of the LEDs of the floodlight are formed by the first LED type (1) and 60% to 80% by the second LED type (2).

2. The floodlight (3) according to claim 1, wherein the LEDs of the floodlight are formed to 30% ± 5% by the first LED type (1) and to 70% ± 5% by the second LED type (2).

3. The floodlight (3) according to one of the preceding claims, wherein the two LED types (1, 2) in the floodlight are separately controllable, in particular separately dimmable.

4. The floodlight (3) according to claim 3, wherein the LEDs of the second type (2) can be supplied with a higher current than the LEDs of the first type (1).

5. The floodlight (3) according to any one of the preceding claims, wherein the LEDs are arranged individually in the luminaire and the nearest neighbors of an LED of the first type (1) are formed at least in part by LEDs of the second LED type (2).

6. The floodlight (3) according to any one of claims 1 to 4, wherein the LEDs are arranged in clusters (4, 5) of one of the two LED types (1, 2) each.

7. The floodlight (3) according to any one of claims 1 to 4, wherein the LEDs are arranged in clusters and at least some of the clusters comprise LEDs of both LED types (1, 2).

8. The floodlight (3) according to claim 6 or 7, wherein each of the clusters is arranged on a separate Printed Circuit Board, PCB, (6).

9. A use of one or more of the floodlights (3) according to any one of the preceding claims for illuminating a lawn area.

10. The use according to claim 9, wherein a control software energizes the LEDs of the two types (1, 2) differently depending on time and/or depending on measured values of at least one environmental sensor.

11. A sports facility with a plurality of floodlights (3) according to any one of claims 1 to 8, wherein the floodlights (3) are at least partially aligned to a lawn surface of the sports facility.

## Revendications

1. Projecteur (3) pour un éclairage de sites sportifs dotés de surfaces de pelouse, en particulier projecteur de stades, avec des sources de lumière sous forme de LED, le projecteur (3) comportant au moins un premier type de LED (1) et un deuxième type de LED (2), le deuxième type de LED (2) comportant des LED à spectre complet ayant un indice de rendu des couleurs supérieur à 90, en particulier d'au moins 95, et le premier type de LED (1) comportant des LED ayant un indice de rendu des couleurs inférieur à 80, de préférence égal ou inférieur à 70, **caractérisé en ce que** les LED du projecteur sont formées à raison de 20 % à 40 % du premier type de LED (1) et à raison de 60 % à 80 % du deuxième type de LED (2).

2. Projecteur (3) selon la revendication 1, les LED du projecteur étant formées à raison de 30 % ± 5 % du premier type de LED (1) et à raison de 70 % ± 5 % du deuxième type de LED (2).

3. Projecteur (3) selon l'une des revendications précédentes, les deux types de LED (1, 2) pouvant être commandés séparément dans le projecteur, pouvant en particulier être modulés séparément.

4. Projecteur (3) selon la revendication 3, les LED du deuxième type (2) pouvant être alimentés avec des courants plus forts que les LED du premier type (1).

5. Projecteur (3) selon l'une des revendications précédentes, les LED étant disposées de façon individuelle dans la lampe, et les voisins les plus proches d'une LED du premier type (1) étant au moins partiellement formés par des LED du deuxième type (2).

6. Projecteur (3) selon l'une des revendications 1 à 4, les LED étant disposées dans des clusters (4, 5) de respectivement l'un des deux types de LED (1, 2).

7. Projecteur (3) selon l'une des revendications 1 à 4, les LED étant disposées dans des clusters, et au moins certains des clusters comprenant des LED des deux types de LED (1, 2).

8. Projecteur (3) selon la revendication 6 ou 7, chacun des clusters étant disposé sur respectivement un propre Printed Circuit Board, PCB, (6).

9. Utilisation d'un ou de plusieurs des projecteurs (3) selon l'une des revendications précédentes pour l'éclairage d'une surface de pelouse.

10. Utilisation selon la revendication 9, un logiciel de commande alimentant en courant les LED des deux types (1, 2) de façon différente en fonction de l'heure et/ou en fonction de valeurs de mesure d'au moins un capteur d'environnement.

11. Site sportif avec une multiplicité de projecteurs (3) selon l'une des revendications 1 à 8, les projecteurs (3) étant aménagés au moins en partie sur une surface de pelouse du site sportif.
